# EUROPÄISCHE PATENTSCHRIFT

(11) **EP 2 792 598 B1**
(45) Veröffentlichungstag und Bekanntmachung des Hinweises auf die Patenterteilung: **18.05.2016**
(21) Anmeldenummer: 13164482.5
(22) Anmeldetag: 19.04.2013
(51) Int. Cl.: B65B 7/28, B67B 3/20

(54) **Probenvorbereiter mit Drehgreifer**
Sample preparer with rotary gripper
Préparateur d'échantillons avec préhenseur rotatif

(43) Veröffentlichungstag der Anmeldung: 22.10.2014
(73) Patentinhaber: Mettler-Toledo GmbH, 8606 Greifensee (CH)
(72) Erfinder: Weber, René, 8133 Esslingen (CH)
(74) Vertreter: Mettler-Toledo

(56) Entgegenhaltungen:
- WO-A1-2007/132337
- WO-A1-2009/016502

## Beschreibung

Die vorliegende Erfindung bezieht sich auf einen Drehgreifer zum Öffnen und Verschliessen von Drehverschlüssen. Der erfindungsgemässe Drehgreifer kommt hauptsächlich in einem Probenvorbereiter zum Einsatz.

Der Probenvorbereiter dient der Vorbereitung einer Vielzahl von Proben, die in Behältern abgefüllt werden. Die leeren Behälter sind in einem Probenträger angeordnet. Zum Befüllen wird aus einem Probenträger ein leerer Behälter, der mit Hilfe eines mit einem Schraubverschluss versehenen Deckels verschlossen ist, mittels eines Werkzeuges gegriffen und auf einen Lastaufnehmer einer Waage platziert. Anschliessend wird der Deckel entfernt und die gewünschten Substanzen in der gewünschten Menge eindosiert, wobei die Masse der eindosierten Substanz mit der Waage gemessen wird. Danach wird das Gefäss mit dem Deckel verschlossen und wieder im den Probenträger platziert.

Bei diesem Vorgang kommt ein Drehgreifer zum Einsatz. Der Drehgreifer ist in einer Basisstation gelagert. Dort wird er von dem Roboterarm aufgenommen und zum aufzunehmenden Behälter bewegt. Der Drehgreifer greift den Behälter und der Roboterarm transportiert den an ihm angeordneten Drehgreifer und Behälter zu dem Lastaufnehmer und stellt ihn dort ab. Anschliessend öffnet der Drehgreifer mittels einer Drehbewegung den Deckel mit Schraubverschluss. Danach wird der Drehgreifer mit Deckel in der Werkzeugbasisstation zwischengelagert und der offene Behälter wird mit den gewünschten Substanzen befüllt. Für die Befüllung wird ein Dosierorgan, beispielsweise ein Dosierkopf mit einer im oder am Dosierkopf gelagerten Substanz verwendet. Wird der Behälter mit verschiedenen Substanzen befüllt, werden unterschiedliche Dosierorgane verwendet, die vom Roboterarm zwischen dem Behälter und Dosierorganbasisstation transportiert werden. Nachdem der Füllvorgang abgeschlossen ist, wird der Drehgreifer wieder vom Roboterarm aufgenommen und zum Behälter bewegt. Dort wird der im Drehgreifer angeordnete Deckel wieder auf den Behälter geschraubt und der gefüllte Behälter wird zurück in den Probenträger gestellt.

Typischerweise wird eine Masse in einem Bereich zwischen 0.5 mg und 5000 mg in den Behälter eindosiert. Diese kleine Masse stellt hohe Genauigkeitsanforderungen an die Waage.

Der Probenvorbereiter wird in Laborumgebung eingesetzt. Zur Probenvorbereitung werden sensitive Stoffe in einen Behälter dosiert. Diese Stoffe dürfen nicht mit Schmiermitteln kontaminiert werden.

Aus dem Stand der Technik sind verschiedene Drehgreifer bekannt.

Aus US7836664 B2, EP2179758 B1, WO2008043498A1 und US20070068117 A1 sind Drehgreifer bekannt, die mittels schwenkbaren Backen den Deckel fixieren. Nachteilig ist dabei, dass den Backen mit Hilfe eines Schmiermittels geschmiert werden müssen. Durch das Schmiermittel kann es zur Kontamination des abzufüllenden Guts kommen. Ausserdem werden den Backen mittels Federkraft auf den Deckel gedrückt. Somit ruht das Gewicht der Backen auf dem Deckel, wodurch das Gewicht der Backen auf der Waage aufgelegt wird. Da die Waage empfindlich ist, kann es vorkommen dass der Überlastschutz der Waage aktiviert wird. Das Aktivieren des Überlastschutzes kann zu einer Nullpunktverschiebung der Waage führen. Nachfolgende Messungen wären ungenau.

Die in US7765772 B2 und US541703 A offenbarten Drehgreifer drücken mittels der Federkraft einer Feder den Drehverschluss während des Schliessvorgangs nach unten. Diese Federkraft würde ebenfalls auf Lastaufnehmer wirken und den Überlastschutz der Waage aktivieren.

Es ist somit Aufgabe der vorliegenden Erfindung einen Drehgreifer zu schaffen, der zu keiner Kontamination führt und nicht den Überlastschutz der Waage aktiviert.

Diese Aufgabe wird von dem erfindungsgemässen Drehgreifer gemäss dem unabhängigen Anspruch und dessen abhängigen Ansprüchen gelöst.

Mit Hilfe des erfindungsgemässen Drehgreifers kann ein Deckel gegriffen und gedreht werden. Er weist eine drehbar gelagerte Spannzange auf, wobei in einer gespannten Betriebsposition der Deckel in der Spannzange einspannbar und darin drehbar ist und in einer gelösten Betriebsposition der Deckel aus der Spannzange lösbar ist. Dabei ist die Spannzange länglich ausgebildet und weist ein erstes und ein zweites Ende auf. Das erste Ende weist einen im Wesentlichen starren Bereich auf und das zweite Ende weist einen Greifbereich auf, der einen im Wesentlichen zylinderförmigen Hohlraum zur Aufnahme des Deckels aufweist und der Hohlraum beim Wechsel von der gespannten in die gelöste Betriebsposition aufweitbar ist. In einer bevorzugten Ausführungsform weist der zylinderförmige Hohlraum eine kreisförmige Grundfrom auf. Es sind jedoch auch andere Grundformen, wie beispielsweise dreieckförmige, viereckförmige oder vieleckförmige Grundformen möglich. Erfindungsgemässe ist zwischen dem Greifbereich und dem starren Bereich der Spannzange ein Spannbereich angeordnet. Der Greifbereich und der Spannbereich weist eine Innenseite und eine Aussenseite auf, wobei die Aussenseite des Spannbereichts die Form eines sich zum Greifbereich aufweitenden Konus aufweist und der Konus verformbar ausgestaltet ist. Die Innenseite des Spannbereichs und die Innenseite des Greifbereichs grenzen direkt aneinander an. Das Gleiche gilt für die Aussenseite des Spannbereichs und die Aussenseite des Greifbereichs. In gespannter Betriebsposition ist der verformbare Konus mittels eines auf dem Konus verschiebbar gelagterten Rings zusammendrückbar, wodurch der Hohlraum derart verengbar ist, dass ein sich im Hohlraum befindlicher Deckel einspannbar ist und durch Lösen des Rings der Hohlraum derart aufweitbar ist, dass der Deckel aus dem Hohlraum entfernbar ist. Der Ring besteht aus einem im Wesentlichen starren Material. Die Spannzange ist in Betriebsposition im Wesentlichen vertikal ausgerichtet. Das erste Ende mit dem starren Bereich ist in Betriebsposition somit oberhalb des zweiten Endes mit dem Greifbereich angeordnet. Der Ring und der Konus sind koaxial zur Achse des Spanngreifers angeordnet. Da der Konus sich zum Spannbereich stetig verjüngt und der Spanngreifer vertikal ausgerichtet ist, wird der Ring durch die Schwerkraft auf den Konus gedrückt und reduziert dadurch den im Greifbereich angeordneten Hohlraum. Auf diese Weise wird der Deckel des Gefässes im Greifbereich in der Spannzange eingespannt. Wird der Ring nach oben bewegt, reduziert sich der Druck auf den Konus und der Hohlraum im Greifbereich vergrössert sich, wodurch der Deckel aus dem Greifbereich entfernt werden kann.

Dieser erfindungsgemässe Drehgreifer weist den Vorteil auf, dass zwischen Ring und Konus kein Schmiermittel benutzt werden muss. Somit kann es zu keiner Kontamination des Dosierguts durch Schmiermittel kommen.

Ein weiterer Vorteil besteht darin, dass der Deckel durch den auf dem Konus aufliegenden Ring im Hohlraum eingeklemmt wird. Es wirkt keine zusätzliche Kraft auf den Lastaufnehmer und der Überlastschutz der Waage wird nicht aktiviert.

Bevorzugterweise ist der Ring mittels einer koaxial um die Spannzange angeordneten Feder in gespannter Betriebsposition auf den Konus angeordnet. Durch diese Anordnung wirkt die Federkraft ebenfalls in vertikaler Richtung und die Feder ist mehrheitlich um den Spannbereich der Spannzange angeordnet. Die Federkraft ist dabei derart dimensioniert, dass in gespannter Betriebsposition die auf den Ring wirkende Federkraft gross genug ist um den Ring in Position zu halten. In gespannter Betriebsposition liegt nur die Vorspannung der Feder an. Soll die gelöste Betriebsposition eingenommen werden, muss die Feder weiter zusammengedrückt werden. Demzufolge ist die Klemmung des Rings passiv und zur Lösung des Rings muss der Ring aktiv gegen die wirkende Federkraft angehoben werden. Der Ring kann mittels eines Mittnehmerstifts gegen die Federkraft der vorgespannten Feder vom Konus wegbewegt werden, wodurch die gelöste Betriebsposition einnehmbar ist. Alternative Ausführungsformen können anstelle der Feder einen hydraulisch oder pneumatisch angetriebenen Mechanismus aufweisen, der in Verbindung mit einer Drehkupplung wirkt.

Der Mitnehmerstift ist im Wesentlichen länglich ausgebildet und innerhalb eines Hohlraumes der Spannzange angeordnet. Der Mitnehmerstift weist ein erstes und ein zweites Ende auf. Das erste Ende ist im Wesentlichen auf der Höhe des Rings angeordnet. Das erste Ende weist Nasen auf, die durch Aussparungen des Greifbereichs hindurchgeführt werden können und derart ausgestaltet sind, dass bei einer Bewegung nach Oben der Ring angehoben wird und die Spannzange die gelöste Position einnehmen kann. In gespannter Position berühren weder der Mitnehmerstift, noch die Nasen den Ring und die Spannzange. Weder in gespannter noch in gelöster Position wirkt die Federkraft auf den Lastaufnehmer, wodurch sichergestellt wird, dass Überlastschutz der Waage nicht aktiviert wird.

Das zweite Ende des Mitnehmerstifts ist im Innern der Spannzange angeordnet. An dem zweiten Ende wirkt ein Antriebsmechanismus der eine vertikale Bewegung des Mitnehmerstifts bewirkt und somit mit Hilfe des Antriebsmechanismus der Wechsel zwischen gelöster und gespannter Betriebsposition gesteuert werden kann.

Die Einnahme der gelösten Betriebsposition wird dadurch unterstützt, indem die Innenseite der Spannzange die Form eines sich nach oben verjüngenden Konus aufweist und der Mitnehmerstift einen konischen oder sich nach oben verjüngenden Bereich aufweist, der mit der konusförmigen Innenseite der Spannzange derart zusammenwirkt, dass beim Wechsel zwischen gespannter und gelöster Betriebsposition sich der Hohlraum durch Spreizen des Greifbereichs der Spannzange vergrössert. Die Spannzange ist vorteilhafterweise aus leicht federndem Material gefertigt. Wichtig ist dabei die Federung des Materials in radialer Richtung. Die Federung der Spannzange in radialer Richtung kann durch axial ausgerichtete Schlitze wesentlich unterstützt werden. Die Schlitze sind dabei im Spannbereich und Greifbereich angeordnet. Idealerweise laufen die Schlitze in axialer Richtung am Ende der Spannzange im Greifbereich aus. Dadurch kann der Greifbereich leichter zusammengedrückt werden. In gelöster Betriebsposition ist die Federkraft der Spannzange entspannt. In gespannter Betriebsposition ist die Federkraft der Spannzange gespannt. Materialermüdung kann jedoch dazu führen, dass die Federkraft während der Lebensdauer der Spannzange kleiner werden kann. Damit die Spannzange trotzdem noch gelöst werden kann, wirken der konische, beziehungsweise nach oben verjüngende Bereich des Mitnehmerstifts und der Konus an der Innenseite des Greifbereichs in der vorgängig beschriebenen Weise zusammen. Dieser Vorgang kann auch als Zwangsöffnung bezeichnet werden. Die beste Wirkung kann dabei erzielt werden wenn die Oberfläche beider Koni im Wesentlichen parallel zueinander ausgerichtet sind.

In einer alternativen Ausführungsform ist die Spannzange aus einem nicht-federndem Material hergestellt. Bei dieser Ausgestaltung wird die Spannzange bei Einnahme der entspannten Betriebsposition immer vom Konus des Mitnehmerstifts auseinander gedrückt.

Bevorzugterweise sind die Spannzange und der Ring in einer Hülse angeordnet, wobei die Spannzange fest mit der Hülse verbunden ist. Die Hülse kann sowohl form- wie auch kraftschlüssig mit der Spannzange verbunden sein. Es ist vorteilhaft die Spannzange, den Ring und die Hülse koaxial zueinander anzuordnen. Vorteilhafterweise ist die Hülse konzentrisch ausgestaltet und ist drehbar in einem Gehäuse gelagert ist. Durch die konzentrische Hülse kann der runde Ring passgenau durch die Hülse umschlossen werden.

Beim Öffnen beziehungsweise Schliessen des Deckels mit Schraubverschluss bewegt sich der Deckel auf Grund der Steigung des Drehgewindes nach oben beziehungsweise nach unten. Typischerweise beträgt die dadurch erzeugt Höhendifferenz ca. 8mm. Diese vertikale Bewegung des Deckels und der ihn umschliessenden Spannzange kann zu einer Verkantung der Spannzange im Gehäuse führen. Dem kann entgegengewirkt werden, indem die Hülse im betriebsbereiten Zustand in vertikaler Richtung verschiebbar im Gehäuse gelagert ist. Diese Anordnung bietet den Vorteil, dass die Hülse mit allen in ihr angeordneten Bauteilen zusammen mit dem Deckel nach oben beziehungsweise nach unten bewegt wird. Eine Verkantung der Spannzange im Gehäuse wird vermieden.

Der erfindungsgemässe Drehgreifer weist einen ersten Antriebsmechanismus zur Anhebung des Rings und einen zweiten Antriebsmechanismus für die Rotation der Spannzange auf. Vorteilhafterweise ist sowohl der erste als auch der zweite Antriebsmechanismus neben der Spannzange angeordnet ist. Diese Anordnung bietet den Vorteil, dass der Drehgreifer eine kompakte Bauweise aufweist. Die kompakte Bauweise ist vor allem bei dem Einsatz mit einem Roboterarm von Vorteil. Aus dem Stand der Technik, beispielsweise EP0876991 B1, sind Drehgreifer bekannt bei denen der Antriebsmechanismus oberhalb der Spannzange angeordnet ist. Diese bekannten Drehgreifer müssen nicht bewegt werden, da sie fest festinstalliert sind. Nachteilig bei diesen aus dem Stand der Technik bekannten Ausführungsformen ist, dass der Drehgreifer hoch ist. Demzufolge bräuchte der Roboterarm mehr Platz, die Fahrwege wären länger und es würde mehr Stauraum für den Drehgreifer benötigt. Ein weiterer Nachteil aus den aus dem Stand der Technik bekannten Drehgreifer ist, dass durch die Hebel zur Kraftübertragung grösser wären, was wiederum zu Ungenauigkeiten führen kann. Diese Ungenauigkeiten können vor allem bei dem Einsatz in der sensiblen Laborumgebung einen grossen Einfluss haben.

Vorteilhafterweise erzeugt der erste Antriebsmechanismus im betriebsbereiten Zustand eine Bewegung in vertikaler Richtung. Diese vertikale Bewegung hebt über einen Hebel mit Hilfe des Mitnehmerstifts den Ring an. Der Hebel weist ein erstes und ein zweites Ende auf. Das erste Ende des Hebels ist mit dem ersten Antriebsmechanismus verbunden und das Zweite Ende des Hebels ist über ein Führungssystem mit dem Mitnehmerstift verbunden. Das Führungssystem ist derart ausgestaltet, dass es durch zwei beweglich gelagerte Führungsstifte die Rotation des Hebels in eine reine vertikale Bewegung des Mitnehmerstifts umwandelt.

Vorteilhafterweise ist zwischen dem Hebel und dem ersten Antriebsmechanismus ein Kugelgelenk angeordnet, wobei das Kugelgelenk eine Drehbewegung auf den Mitnehmerstift überträgt. Durch diese Anordnung kann der erste Antriebsmechanimus an der gleichen Stelle bleiben, lediglich der Hebel wird gekippt und das Kugelgelenk verhindert ein Verkanten bei der vertikalen Bewegung der Hülse.

Bevorzugterweise treibt der zweite Antriebsmechanismus ein im betriebsbereiten Zustand horizontal ausgerichtetes Antriebszahnrad an, das mit einem mit der Hülse verbundenen Spannzangenzahnrad zusammenwirkend angeordnet ist. Dabei ist das Antriebszahnrad dicker ausgestaltet, wodurch das Spannzangenzahnrad auch bei vertikal verschobener Spannzange mit dem Antriebszahnrad zusammenwirken kann. Die Höhe des Antriebszahnrades ist derart gewählt, dass das Spannzangehnzahnrad sowohl beim bei komplett aufgeschraubten als komplett abgeschraubten Deckel mit dem Antriebszahnrad zusammenwirken kann. Der Antriebsmechanismus ist zusammen mit dem Drehgreifer während des Öffnens beziehungsweise Schliessens starr gelagert. Spannzange ist im Drehgreifer in vertikaler Richtung beweglich gelagert. Demzufolge ist der Antriebsmechanismus im Bezug zur Spannzange in vertikaler Richtung verschiebbar.

Es ist von Vorteil die Spannzange mittels einer zwischen dem Gehäuse und der Spannzange angeordneten, vertikal ausgerichteter Gehäusefeder schwimmend zu lagern, wobei im betriebsbereiten Zustand die Spannzange gegen die Federkraft der Gehäusefeder nach unten gedrückt wird. Bei der Verwendung der Spannzange auf einer hochpräzisen Waage ist es wichtig, dass zu keinem Zeitpunkt das ganze Gewicht des Drehgreifers auf der Waage liegt und dadurch unter Umständen der Überlastschutz aktiviert würde. Wird die Spannzange gegen die Federkraft der Gehäusefeder durch die Rotation des Schraubverschlusses nach unten bewegt, schnellt die Spannzange nach dem Lösen des Spannbereichs wieder nach oben. Dadurch wird sichergestellt, dass das Gewicht der Spannzange zu keinem Zeitpunkt auf der Waage aufliegt. Typischerweise wird die Gehäusefeder während dieses Vorgangs um etwa 2mm zusammengedrückt.

Vorteilhafterweise weist der Mitnehmerstift eine Zentrumsbohrung zur Aufnahme einer Sensornadel auf. Dabei ist die Sensornadel derart angeordnet, dass bei im Hohlraum angeordnetem Deckel die Sensornadel entlang der Achse der Zentrumsbohrung verschoben wird. Diese Verschiebung kann mittels eines geeigneten Sensors detektiert werden und ein entsprechendes Signal an den Benutzer oder ein Computersystem übermittelt werden. Typischerweise wird ein optischer Sensor mit einer Lichtschranke verwendet. Es jedoch auch der Einsatz von anderen Sensoren möglich.

Idealerweise ist die Spannzange und der Ring aus anodiziertem und/oder mit Teflon imprägnierten Aluminium gefertigt sind. Ausserdem können auch andere Teile, wie beispielsweise die Hülse aus den oben erwähnten Materialien gefertigt werden. Diese Materialien bieten den Vorteil, dass sie eine glatte Oberfläche und somit eine kleine Reibung aufweisen. Wegen der niedrigen Reibung zwischen den Bauteilen sind keine zusätzlichen Schmiermittel notwendig, die zu einer Kontamination der abzufüllenden Stoffe führen können. Ein weiterer Vorteil besteht darin, dass zwischen den Bauteilen des erfindungsgemässen Drehgreifers weniger Reibung auftritt und der Drehgreifer weniger wartungsanfällig ist.

Einzelheiten des erfindungsgemässen Drehgreifers ergeben sich anhand der Beschreibung des in den Zeichnungen dargestellten Ausführungsbeispiels. Es zeigen:
- Fig. 1: Probenvorbereiter in dem der erfindungsgemässe Drehgreifer zum Einsatz kommt;
- Fig. 2: Schnitt durch den erfindungsgemässen Drehgreifer;
- Fig. 3: Explosionsdarstellung des erfindungsgemässen Drehgreifers und
- Fig. 4: Explosionsdarstellung der Spannzange

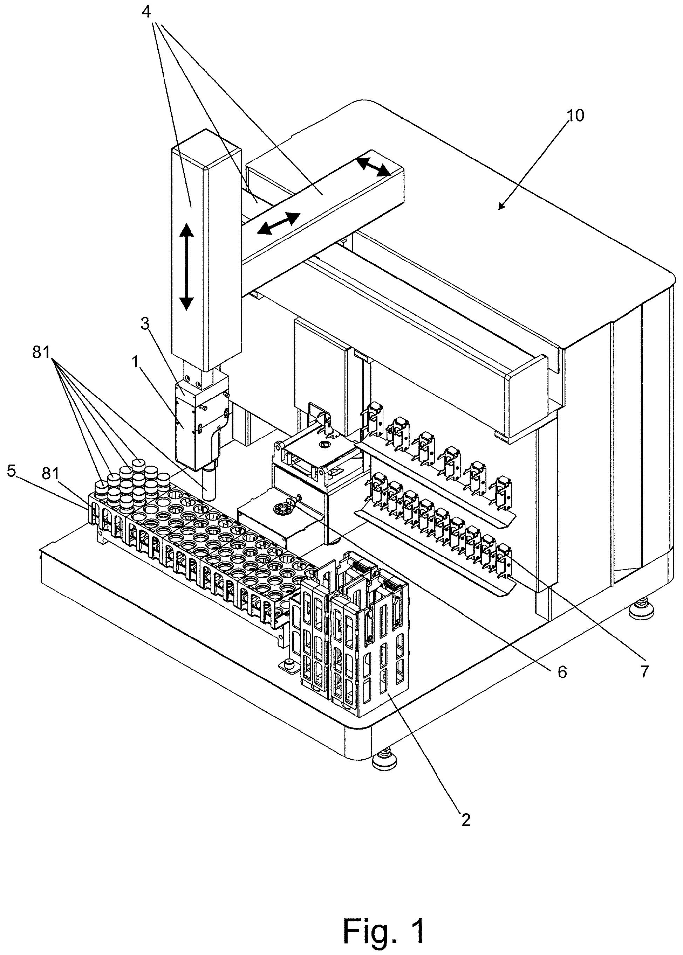

Figur 1 zeigt einen Probenvorbereiter 10, in dem der erfindungsgemässe Drehgreifer 1 bei der Probenvorbereitung zum Einsatz kommt. Der Probenvorbereiter 10 weist eine Werkzeugbasisstation 2 auf, in der verschiedene Werkzeuge, wie beispielsweise der Drehgreifer 1 oder ein Pulverdosierkopfgreifer, zwischengelagert werden. In einem Probenträger 5 sind mehrere Gefässe 81 angeordnet. In der Dosierkopfaufbewahrung 7 können verschiedene Dosierköpfe mit darin enthaltenen, unterschiedlichen Materialien aufbewahrt werden. Zur Probenvorbereitung können Gefässe 81 auf den Lastaufnehmer 6 positioniert werden. Mittels des Bewegungsmoduls 4 kann der Werkzeugträger 3 in x-, y, und z-Richtung bewegt werden.

Zur der Probenvorbereitung wird der Werkzeugträger 3 mittels des Bewegungsmoduls 4 zur Werkzeugbasisstation 2 bewegt. Dort nimmt er den Drehgreifer 1 auf. Mittels des Drehgreifers 1 wird ein verschlossenes leeres Gefäss 81 aus dem Probenträger 5 entnommen und anschliessen auf dem Lastaufnehmer 6 platziert. Dort wird mittels des Drehgreifers 1 der Deckel 80 des Gefässes 81 entfernt. Nachdem der Deckel 80 entfernt wurde, wird der Drehgreifer 1 mitsamt des Deckels 80 in der Werkzeugbasisstation 2 verstaut. In das offene Gefäss 81 werden anschliessend die vordefinierten Substanzen eindosiert, wobei die Masse der eindosierten Substanzen mittels einer mit dem Lastaufnehmers 6 verbunden Waage kontrolliert beziehungsweise gesteuert werden. Nachdem die gewünschten Substanzen eindosiert wurden, nimmt der Werkzeugträger 3 den Drehgreifer 1 mit dem darin enthaltenen Deckel 80 auf und verschliesst das auf dem Lastaufnehmer 6 platzierte Gefäss 81 mit dem im Drehgreifer 1 enthaltenen Deckel 80 und transportiert anschliessend das verschlossene Gefäss 81 zurück in den Probenträger 5. Anschliessend werden, falls gewünscht, weitere Gefässe 81 mit vordefinierten Substanzen befüllt.

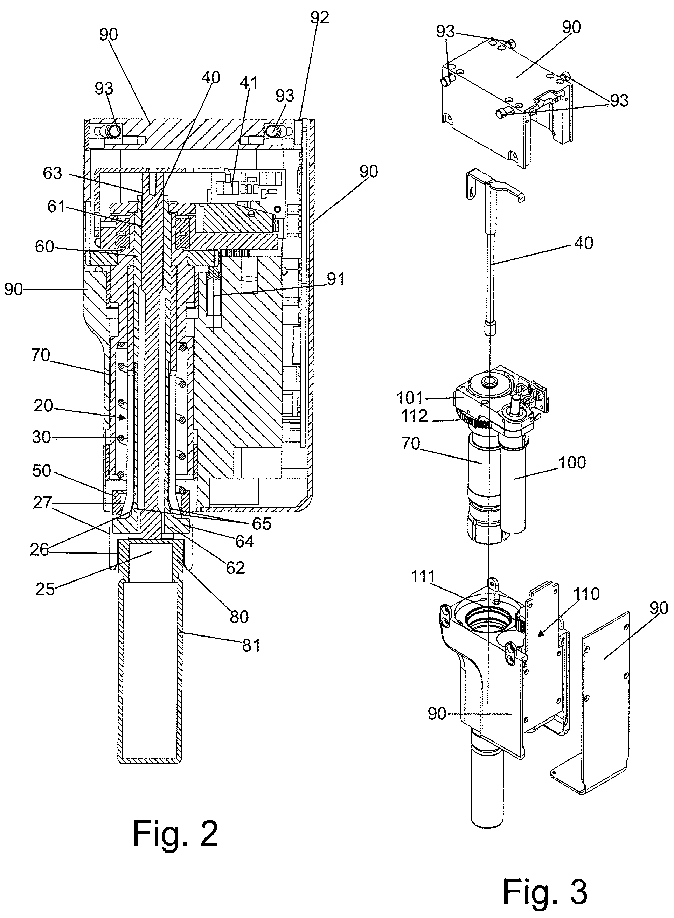

Figur 2 zeigt einen Schnitt durch den erfindungsgemässen Drehgreifer 1, dessen Spannzange 20 ein verschlossenes Gefäss 81 positioniert ist. Die gleichen Bauteile sind ebenfalls in der in Figur 3 dargestellten Explosionsdarstellung zu sehen.

Der Drehgreifer 1 weist ein Gehäuse 90 auf, in dem die Spannzange 20 und die die Spannzange 20 steuernde Antriebsmechanismen 100, 110 angeordnet sind. Das Gehäuse 90 weist Seitenwände und einen Verschlussplatte auf. Im betriebsbereiten Zustand ist die Verschlussplatte im Wesentlichen horizontal ausgerichtet und befindet sich oberhalb der Spannzange 20. An der Verschlussplatte sind Elemente zur Befestigung des Gehäuses 90 mit dem Werkzeugträger 3 angeordnet. Diese Elemente können als Stifte 93 ausgestaltet sein. Es sind jedoch auch andere Ausführungsformen denkbar. Am Gehäuse 90 ist eine Kontaktstelle 92 zur Zuführung von Strom und/oder Datensignalen angeordnet. Über diese Kontaktstelle 92 wird dem Drehgreifer 1 über den Werkzeugträger 3 Strom und/oder Steuersignale zum Antrieb und zur Steuerung der Antriebsmechanismen 100, 110 zugeführt. Im Gehäuse 90 ist die Spannzange 20 angeordnet. Die Spannzange 20 weist ein erstes und ein zweites Ende auf und ist länglich ausgebildet. Die in der Längsrichtung der Spannzange 20 verlaufende Achse ist im betriebsbereiten Zustand im Wesentlichen vertikal ausgerichtet. Das erste Ende der Spannzange 20 weist einen im Wesentlichen starren Bereich 21 auf. Das zweite Ende weist einen Greifbereich 22 auf. Der Greifbereich 22 weist einen im Wesentlichen zylinderförmigen Hohlraum 25 zur Aufnahme eines Deckels 80 auf. Der Greifbereich 22 kann aufgeweitet oder gelöst werden, wodurch sich der Hohlraum 25 vergrössert beziehungsweise verkleinert. Bei kleinem Hohlraum 25 wird die gespannte Betriebsposition eingenommen werden, in der ein Deckel 80 in den Greifbereich 22 eingespannt und darin gedreht werden kann. Bei grossem Hohlraum 25 wird die gelöste Betriebsposition eingenommen, in der der Deckel 80 aus dem Greifbereich 22 gelöst werden kann. Zwischen dem starren Bereich 21 und dem Greifbereich 22 ist ein Spannbereich 23 angeordnet. Mittels des Spannbereichs 23 kann der Greifbereich 22 gespannt beziehungsweise gelöst werden. Dazu weist der Spannbereich 23 eine Aussenseite 27 auf, wobei zumindest ein Teil der Aussenseite 27 die Form eines Konus 24 aufweist, der sich zum Greifbereich 22 hin aufweitet. Der Konus 24 ist in radialer Richtung verformbar ausgestaltet, d.h. der Konus 24 ist in radialer Richtung flexibel. Greifbereich 22 und Spannbereich 23 sind derart ausgestaltet, dass durch ein Zusammendrücken des Konus 24 eine Verkleinerung des Hohlraums 25 und somit die Einnahme der gespannten Betriebsposition erreicht wird. Ein Aufweiten des Konus 24 führt zu einer Vergrösserung des Hohlraums 25 und somit zur Einnahme der gelösten Betriebsposition. Auf dem flexiblen Konus 24 ruht ein im Wesentlichen starrer Ring 50, der in vertikaler Richtung verschiebbar ist. Wird der Ring 50 in Betriebsposition nach unten gedrückt, verengt sich der Konus 24 und somit auch der Hohlraum 25, wodurch die gespannte Betriebsposition eingenommen wird. Wird hingegen der Ring 50 nach oben geschoben, weitet sich der Konus 24 und somit auf der Hohlraum 25 auf, wodurch die gelöste Betriebsposition eingenommen wird. Die Geometrie und das Material der Spannzange 20 ist so gewählt, dass die Spannzange 20 in gespannter Betriebsposition gespannt ist und in gelöster Betriebsposition entspannt ist. Demzufolge wird der Konus 24 durch Aufpressen des Rings 50 zusammengedrückt und beim Zurückziehen des Rings 50 entspannt sich das Material der Spannzange 20 und der Hohlraum 25 weiter sich auf.

Der Ring 50 wird mit einer vorgespannten Feder 30 auf den Konus 24 gepresst. Die Feder 30 ist koaxial um die Spannzange 20 angeordnet. Um die entspannte Betriebsposition einnehmen zu können, muss der Ring 50 gegen die Federkraft der Feder 30 nach oben gedrückt werden. Die Federkraft ist in gelöster Position grösser als in gespannter Position. Zur Einnahme der gelösten Position muss der Ring 50 aktiv nach oben geschoben werden. Dies geschieht mittels eines Mittnehmerstifts 60. Der Mittnehmerstift 60 ist in einem Hohlraum im Innern der Spannzange 20 angeordnet. Der Mitnehmerstift 60 weist ein erstes Ende 62 und ein zweites Ende 63 auf. Am ersten Ende 62 sind Nasen 64 angeordnet, die durch im Greifbereich 22 und Spannbereich 23 angeordnete Schlitze 28 durchgreifen. Durch Anheben des Mitnehmerstifts 60 wird der Ring 50 gegen die Federkraft der Feder 30 nach oben gedrückt. Um Sicherzustellen, dass auch bei nachlassender Elastizität des Materials der Spannzange 20, sich der Hohlraum 25 aufweitet, ist an der Innenseite 26 der Spannzange 20 ein sich nach oben verjüngender konusförmige Bereich 24 angeordnet, der mit nach oben verjüngenden Flächen 65 des Mitnehmerstifts 60 derart zusammenwirken, dass beim nach oben Bewegen des Mitnehmerstifts 60 der Greifbereich 22 auseinander gedrückt wird.

Das erste Ende 62 des Mitnehmerstifts 60 ist im Innern des Drehgreifers 1 angeordnet und mit einem ersten Antriebsmechanismus 100 verbunden. Der erste Antriebsmechanismus 100 bewegt den Mitnehmerstift 60 in kontrollierter Weise nach oben und unten. Der erste Antriebsmechanismus 100 ist seitlich vom Mitnehmerstift 60 und Spannzange 20 angeordnet. Der erste Antriebsmechanismus 100 erzeugt im betriebsbereiten Zustand eine Rotationsbewegung in der horizontalen Ebene. Diese Rotationsbewegung wird mittels eines Kugelgelenks 102 und eines Hebels 101 in eine vertikale Bewegung umgewandelt, die den Mitnehmerstift 60 und somit auch den Ring 50 im betriebsbereiten Zustand in vertikaler Richtung auf- bzw. abwärtsbewegt.

Die Spannzange 20, der Mitnehmerstift 60 und der Ring 50 sind in einer Hülse 70 angeordnet. Der starre Bereich 21 der Spannzange 20 ist fest mit dem der Hülse 70 verbunden. Idealerweise sind sowohl die Spannzange 20 als auch die Hülse 70 mehrheitlich rotationssymmetrisch ausgestaltet. Die Spannzange 20, der Ring 50 und die Hülse 70 sind koaxial zueinander angeordnet. Die umgebende Hülse 70 ist rotationssymmetrisch und drehbar im Gehäuse 90 gelagert. Dadurch, dass die Spannzange 20 fest mit der Hülse 70 verbunden ist, drehen Spannzange 20 und Hülse miteinander. Zum Öffnen des Deckels 80 wird die Hülse 70 mit der in der Spannzange 20 eingespannte Deckel 80 rotiert.

Beim Auf- bzw. Abschrauben des Deckels 80 bewegt sich die Spannzange 20 somit auch die Hülse 70 mit den darin angeordneten Bauteilen nach oben beziehungsweise nach unten. Um diese Bewegung auszugleichen, ist die Hülse 70 schwimmend im Gehäuse 90 gelagert. Der erste Antriebsmechanismus 100 ist zusammen mit der Spannzange 20 schwimmend im Gehäuse 90 gelagert. Um ein Verkanten der Spannzange 20 oder des Antriebsmechanismus 100 zu vermeiden, ist zwischen dem ersten Antriebsmechanismus 100 und der Spannzange 20 ein um eine horizontale Achse schenkbarer Hebel 101 angeordnet. Anstelle des schwenkbaren Hebels kann alternativ auch eine starre Liniarführung eingesetzt werden.

Die zum Öffnen beziehungsweise Schliessen des Deckels 80 notwendige Drehbewegung wird mit Hilfe eines zweiten Antriebsmechanismus 110 erzeugt. Der zweite Antriebsmechanismus 110 ist ebenfalls seitlich von der Spannzange 20 angeordnet. Durch diese seitliche Anordnung wird eine kompakte Ausgestaltung des Drehgreifers 1 erreicht. Der zweite Antriebsmechanismus 110 treibt ein im betriebsbereiten Zustand horizontal gelagertes Antriebszahnrad 111 an. Dieses Antriebszahnrad 111 wird mit einem mit der Hülse 70 verbundenen Spannzangenzahnrad 112 zusammen. Eine Rotation des Antriebszahnrads 111 bewirkt eine Rotation des Spannzangenzahnrades 112, wodurch ein in der Spannzange 20 eingespannter Deckel 80 vom Gefäss 81 auf- beziehungsweise abgeschraubt wird. Der zweite Antriebsmechanismus 110 ist fest mit dem Gehäuse 90 verbunden, d.h. der zweite Antriebsmechanismus 110 bewegt sich nicht mit dem Deckel 80 nach oben beziehungsweise unten. Um in jeder Position ein Zusammengreifen der beiden Zahnräder 111, 112 sicher zu stellen, ist das Antriebszahnrad 111 dicker als das Spannzangenzahnrad 112 ausgestaltet. Es ist auch möglich, dass anstelle des Antriebszahnrades 111, das Spannzangenzahnrad 112 dicker ausgestaltet ist.

Zwischen der Spannzange 20 und dem Gehäuse 90 ist derart eine vertikal ausgerichtete Gehäusefeder 91 angeordnet, dass im betriebsbereiten Zustand die Spannzange 20 gegen die Federkraft der Gehäusefeder 91 nach unten gedrückt werden muss.

Der Mitnehmerstift 60 weist eine Zentrumsbohrung 61 zur Aufnahme einer Sensornadel 40 auf. Dabei ist die Sensornadel 40 derart angeordnet, dass bei im Hohlraum 25 angeordnetem Deckel 80 die Sensornadel 40 entlang der Achse der Zentrumsbohrung verschoben wird. Diese Verschiebung kann mittels eines geeigneten Sensors detektiert werden und ein entsprechendes Signal an den Benutzer oder ein Computersystem übermittelt werden. Als Sensor wird ein optischer Sensor 41 mit einer Lichtschranke verwendet. Es jedoch auch der Einsatz von anderen Sensoren möglich.

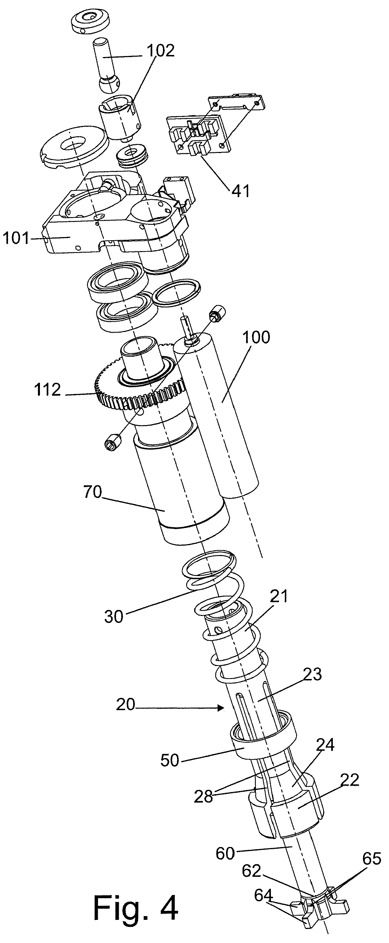

Figur 4 zeigt eine Explosionsdarstellung der Spannzange 20 des erfindungsgemässen Drehgreifers 1. Die Explosionsdarstellung dient dazu die Funktionsweise der in Figur 2 und 3 dargestellten Spannzange 20 zu verdeutlichen.

Obwohl die Erfindung durch die Darstellung eines spezifischen Ausführungsbeispiels beschrieben wurde, ist es offensichtlich, dass zahlreiche weitere Ausführungsvarianten in Kenntnis der vorliegenden Erfindung geschaffen werden können.

### Bezugszeichenliste

- 1: Drehgreifer
- 2: Werkzeugbasisstation
- 3: Wergkzeugträger
- 4: Bewegungsmodul
- 5: Probenträger
- 6: Lastaufnehmer
- 7: Dosierkopfaufbewahrung
- 10: Probenvorbereiter
- 20: Spannzange
- 21: (Zylindrischer) starrer Bereich der Spannzange
- 22: Greifbereich
- 23: Spannbereich
- 24: konischer Bereich der Spannzange
- 25: Hohlraum
- 26: Innenseite der Spannzange
- 27: Aussenseite der Spannzange
- 28: Hohlraum
- 28: Schlitze
- 30: Feder
- 40: Sensorpin, Deckeldetektor
- 41: Sensor
- 50: Ring
- 60: Mitnehmerstift
- 61: Zentrumsbohrung
- 62: Erstes Ende des Mitnehmerstifts
- 63: Zweites Ende des Mitnehmerstifts
- 64: Nasen
- 65: Verjüngender Bereich des Mitnehmerstifts
- 70: Hülse
- 80: Deckel
- 81: Gefäss
- 90: Gehäuse
- 91: Gehäusefeder
- 92: Kontaktstelle für Stromzuführung
- 93: Stifte
- 100: erster Antriebsmechanismus
- 101: Hebel
- 102: Kugelgelenk
- 110: zweiter Antriebsmechanismus
- 111: Antriebszahnrad
- 112: Spannzangenzahnrad

## Patentansprüche

1. Drehgreifer (1) zum Greifen und Drehen eines Deckels (80) mit einer drehbar gelagerten Spannzange (20), wobei in einer gespannten Betriebsposition der Deckel (80) in die Spannzange (20) einspannbar und darin drehbar ist und in einer gelöster Betriebsposition der Deckel (80) aus der Spannzange (20) lösbar ist, wobei die Spannzange (20) länglich ausgebildet ist und ein erstes und ein zweites Ende aufweist und das erste Ende einen im Wesentlichen starren Bereich (21) aufweist und das zweite Ende einen Greifbereich (22) aufweist und der Greifbereich (22) einen im Wesentlichen zylinderförmigen Hohlraum (25) zur Aufnahme des Deckels (80) aufweist und der Hohlraum (25) beim Wechsel von der gespannten in die gelöste Betriebsposition aufweitbar ist,
**dadurch gekennzeichnet, dass** zwischen dem Greifbereich (22) und dem starren Bereich (21) der Spannzange (20) ein Spannbereich (23) angeordnet ist und der Greifbereich (22) und der Spannbereich (23) eine Innenseite (26) und eine Aussenseite (27) aufweisen und die Aussenseite (27) des Spannbereichs (23) die Form eines sich zum Greifbereich (22) aufweitenden Konus (24) aufweist und der Konus (24) verformbar ist und in gespannter Betriebsposition der verformbare Konus (24) mittels eines auf dem Konus (24) verschiebbaren Rings (50) zusammendrückbar ist, wodurch der Hohlraum (25) derart verengbar ist, dass ein sich im Hohlraum (25) befindlicher Deckel (80) einspannbar ist und durch Lösen des Rings (50) der Hohlraum (25) derart aufweitbar ist, dass der Deckel (80) aus dem Hohlraum (25) entfernbar ist.

2. Drehgreifer (1) nach Anspruch 1, **dadurch gekennzeichnet, dass** der Ring (50) mittels einer koaxial um die Spannzange (20) angeordneten Feder (30) in gespannter Betriebsposition gegen den Konus (24) drückbar ist.

3. Drehgreifer (1) nach Anspruch 1 oder 2, **dadurch gekennzeichnet, dass** der Ring (50) mittels eines Mittnehmerstifts (60) gegen die Federkraft der vorgespannten Feder (30) vom Konus (24) wegbewegbar ist, wodurch die gelöste Betriebsposition einnehmbar ist und der Mitnehmerstift (60) im Innern der Spannzange (20) angeordnet ist.

4. Drehgreifer (1) nach Anspruch 3, **dadurch gekennzeichnet, dass** die Innenseite des Spannzange (26) die Form eines sich nach oben verjüngenden Konus (24) aufweist und der Mitnehmerstift (60) mindestens einen sich nach oben verjüngenden Bereich (65) aufweist, der mit der konusförmigen Innenseite (24) der Spannzange (26) derart zusammenwirkt, dass beim Wechsel zwischen gespannter und gelöster Betriebsposition der Hohlraum (28) durch Spreizen des Greifbereichs (22) der Spannzange (20) vergrösserbar ist.

5. Drehgreifer (1) nach einen der vorangehenden Ansprüche, **dadurch gekennzeichnet, dass** die Spannzange (20) und der Ring (50) in einer Hülse (70) angeordnet sind und die Spannzange (20) fest mit der Hülse (70) verbunden ist.

6. Drehgreifer (1) nach Anspruch 5, **dadurch gekennzeichnet, dass** die Spannzange (20), der Ring (50) und die Hülse (70) koaxial zueinander angeordnet sind.

7. Drehgreifer (1) nach Anspruch 5 oder 6, **dadurch gekennzeichnet, dass** die Hülse (70) rotationssymmetrisch ausgestaltet ist und drehbar in einem Gehäuse (90) gelagert ist.

8. Drehgreifer (1) nach einem der Ansprüche 5 bis 7, **dadurch gekennzeichnet, dass** die Hülse (70) im betriebsbereiten Zustand in vertikaler Richtung im Gehäuse (90) verschiebbar ist.

9. Drehgreifer (1) nach einen der vorangehenden Ansprüche, **dadurch gekennzeichnet, dass** ein erster Antriebsmechanismus (100) zur Anhebung des Rings (50) und ein zweiter Antriebsmechanismus (110) für die Rotation der Spannzange (20) vorhanden sind und der erste und zweite Antriebsmechanismus (100, 110) neben der Spannzange (20) angeordnet sind.

10. Drehgreifer (1) nach Anspruch 9, **dadurch gekennzeichnet, dass** der erste Antriebsmechanismus (100) eine Bewegung im betriebsbereiten Zustand in vertikaler Richtung erzeugt, die über einen Hebel (101) mit Hilfe des Mitnehmerstifts (60) den Ring (50) anhebt.

11. Drehgreifer (1) nach Anspruch 9 oder 10, **dadurch gekennzeichnet, dass** zwischen dem Hebel (101) und dem ersten Antriebsmechanismus (100) ein Kugelgelenk (102) angeordnet ist, wobei das Kugelgelenk (102) eine Drehbewegung auf den Mitnehmerstift (60) überträgt.

12. Drehgreifer (1) nach einem der Ansprüche 9 bis 11, **dadurch gekennzeichnet, dass** der zweite Antriebsmechanismus (110) ein im betriebsbereiten Zustand horizontal ausgerichtetes Antriebszahnrad (111) antreibt, das mit einem mit der Hülse (70) verbundenen Spannzangenzahnrad (112) zusammenwirkend angeordnet ist und das Antriebszahnrad (111) dicker ausgestaltet ist, wodurch das Spannzangenzahnrad (112) auch bei vertikal verschobener Spannzange mit dem Antriebszahnrad zusammenwirkend ist.

13. Drehgreifer (1) nach einem der Ansprüche 7 bis 12, **dadurch gekennzeichnet, dass** die Spannzange (20) mittels einer zwischen dem Gehäuse (90) und der Spannzange (20) angeordneten, vertikal ausgerichteter Gehäusefeder (91) schwimmend gelagert ist, wobei im betriebsbereiten Zustand die Spannzange (20) gegen die Federkraft der Gehäusefeder (91) nach unten drückbar ist.

14. Drehgreifer (1) nach einen der vorangehenden Ansprüche, **dadurch gekennzeichnet, dass der** der Mitnehmerstift (60) eine Zentrumsbohrung (61) zur Aufnahme einer Sensornadel (40) aufweist, wobei die Sensornadel (40) derart angeordnet ist, dass bei im Hohlraum (25) angeordnetem Deckel (80) die Sensornadel (40) entlang der Achse der Zentrumsbohrung verschiebbar ist und dies Verschiebung mittels eines Sensors (41) detektierbar ist.

15. Drehgreifer (1) nach einen der vorangehenden Ansprüche, **dadurch gekennzeichnet, dass** die Spannzange (20) und der Ring (50) aus anodiziertem und/oder mit Teflon imprägnierten Aluminium gefertigt sind.

## Claims

1. Rotatable gripper (1), operable to grip and turn a container cap (80), with a rotatably mounted collet clamp (20), designed to work in a locked operating position where the cap (80) can be clamped and turned in the collet clamp (20), and in an unlocked operating position where the cap (80) can be released from the collet clamp (20), wherein the collet clamp (20) is of an elongate configuration with a first and a second end, the first end comprising a substantially rigid section (21), the second end comprising a gripper section (22), the gripper section (22) comprising a substantially cylindrical recess (25) that serves to hold the cap (80), and wherein the recess (25) is designed to expand in width when the operating position is changed from locked to unlocked, **characterized in that** a clamping section (23) is arranged between the gripper section (22) and the rigid section (21) of the collet clamp (20), that the gripper section (22) and the clamping section (23) have an inside surface (26) and an outside surface (27), that the outside surface (27) of the clamping section (23) has the shape of a cone (24) whose width increases towards the gripper section (22), that the cone (24) is capable of being deformed, that in the locked operating position the deformable cone (24) can be compressed by means of a ring (50) that is slidable on the cone (24) whereby the recess (25) can be constricted in such a way that a container cap (80) that is present in the recess (25) can be clamped tight, and that in the unlocked operating position the recess (25) can be widened in such a way that the cap (80) can be removed from the recess (25).

2. Rotatable gripper (1) according to claim 1, **characterized in that** in the locked operating position the ring (50) can be pushed against the cone (24) by means of a spring (30) which is arranged to coaxially surround the collet clamp (20).

3. Rotatable gripper (1) according to claim 1 or 2, **characterized in that** the ring (50) can be moved away from the cone (24) by means of a retractor rod (60) against the spring force of the pre-tensioned spring (30), whereby the unlocked operating position can be attained, said retractor rod (60) being arranged inside the collet clamp (20).

4. Rotatable gripper (1) according to claim 3, **characterized in that** the inside surface (26) of the collet clamp has the shape of an upwardly narrowing cone (24) and the retractor rod (60) has at least one tapered section (65) of upwardly decreasing diameter which cooperates with the conical inside surface (26) of the retractor rod (20) in such a way that when the operating position is changed from locked to unlocked, the recess (25) can be enlarged by the spreading-apart of the gripper section (22) of the collet clamp (20).

5. Rotatable gripper (1) according to one of the preceding claims, **characterized in that** the collet clamp (20) and the ring (50) are arranged in a sleeve (70) and that the collet clamp (20) is solidly connected to the sleeve (70).

6. Rotatable gripper (1) according to claim 5, **characterized in that** the collet clamp (20), the ring (50) and the sleeve (70) are arranged coaxially with one another.

7. Rotatable gripper (1) according to claim 5 or 6, **characterized in that** the sleeve (70) is of a rotationally symmetric design and is rotatably supported in a housing (90).

8. Rotatable gripper (1) according to one of the claims 5 to 7, **characterized in that** in the operating state the sleeve (70) is vertically slidable in the housing (90).

9. Rotatable gripper (1) according to one of the preceding claims, **characterized in that** a first drive mechanism (100) is provided for raising the ring (50) and a second drive mechanism (110) is provided for rotating the collet clamp (20), and that the first and the second drive mechanism (100, 110) are arranged laterally of the collet clamp (20).

10. Rotatable gripper (1) according to claim 9, **characterized in that** the first drive mechanism (100) generates a movement in vertical direction relative to the operating state, whereby the ring (50) is raised up by way of a lever (101) and through the action of the retractor rod (60).

11. Rotatable gripper (1) according to claim 9 or 10, **characterized in that** a ball joint (102) is arranged between the lever (101) and the first drive mechanism (100), wherein the ball joint (102 transmits a rotary movement to the retractor rod (60).

12. Rotatable gripper (1) according to one of the claims 9 to 11, **characterized in that** the second drive mechanism (110) moves a drive gear (111) which in the operating state extends horizontally and is arranged to mesh with a collet gear (112) that is connected to the sleeve (70), and that the drive gear (111) is designed thicker, so that the collet gear (112) remains in mesh with the drive gear even as the collet clamp changes its vertical position.

13. Rotatable gripper (1) according to one of the claims 7 to 12, **characterized in that** the collet clamp (20) is supported in a floating condition by means of a vertically oriented housing spring (91) which is arranged between the housing (90) and the collet clamp (20), wherein in the operating state the collet clamp (20) can be pushed downward against the spring force of the housing spring (91).

14. Rotatable gripper (1) according to one of the preceding claims, **characterized in that** the retractor rod (60) has a central bore hole (61) for a sensor pin (40) which is seated in such a way in the bore hole (61) that the sensor pin (40) can be pushed upwards along the axis of the central bore hole when a container cap (80) is present in the recess and that the vertical displacement of the sensor pin (40) is detectable by means of a sensor (41).

15. Rotatable gripper (1) according to one of the preceding claims, **characterized in that** the collet clamp (20) and the ring (50) are made of anodized and/or PTFE-coated aluminum.

## Revendications

1. Préhenseur rotatif (1) permettant de saisir et de tourner un couvercle (80) avec une pince de serrage (20) montée de façon rotative, le couvercle (80) pouvant être serré dans la pince de serrage (20) dans une position de fonctionnement serrée et pouvant tourner dans celle-ci, et le couvercle (80) pouvant être relâché de la pince de serrage (20) dans une position de fonctionnement relâchée, la pince de serrage (20) étant conçue allongée et présentant une première et une deuxième extrémité, et la première extrémité présentant une région essentiellement rigide (21) et la deuxième extrémité présentant une région de préhension (22), et la région de préhension (22) présentant un espace creux essentiellement cylindrique (25) destiné à recevoir le couvercle (80), et l'espace creux (25) pouvant être élargi lors du passage de la position de fonctionnement serrée à la position de fonctionnement relâchée,
**caractérisé en ce qu'**une région de serrage (23) est agencée entre la région de préhension (22) et la région rigide (21) de la pince de serrage (20), et la région de préhension (22) et la région de serrage (23) présentent un côté intérieur (26) et un côté extérieur (27), et le côté extérieur (27) de la région de serrage (23) présente la forme d'un cône (24) s'élargissant vers la région de préhension (22), et le cône (24) est déformable, et le cône déformable (24) pouvant être comprimé au moyen d'un anneau (50) déplaçable sur le cône (24), moyennant quoi l'espace creux (25) peut être rétréci de manière à pouvoir serrer un couvercle (80) situé dans l'espace creux (25), et le détachement de l'anneau (50) permettant d'élargir l'espace creux (25) de manière à pouvoir retirer le couvercle (80) hors de l'espace creux (25).

2. Préhenseur rotatif (1) selon la revendication 1, **caractérisé en ce que** l'anneau (50) peut être pressé contre le cône (24) dans la position de fonctionnement serrée au moyen d'un ressort (30) agencé coaxialement autour de la pince de serrage (20).

3. Préhenseur rotatif (1) selon la revendication 1 ou 2, **caractérisé en ce que** l'anneau (50) peut être éloigné du cône (24) au moyen d'une tige d'entraînement (60), contre la force de ressort du ressort (30) précontraint, moyennant quoi il est possible de passer à la position de fonctionnement relâchée et la tige d'entraînement (60) se retrouve à l'intérieur de la pince de serrage (20).

4. Préhenseur rotatif (1) selon la revendication 3, **caractérisé en ce que** le côté intérieur de la pince de serrage (26) présente la forme d'un cône (24) s'affinant vers le haut, et la tige d'entraînement (60) présente au moins une région (65) s'affinant vers le haut, laquelle coopère avec le côté intérieur conique (24) de la pince de serrage (26) de telle façon que lors du changement entre la position de fonctionnement serrée et la position de fonctionnement relâchée, l'espace creux (28) peut être agrandi en écartant la région de préhension (22) de la pince de serrage (20).

5. Préhenseur rotatif (1) selon l'une des revendications précédentes, **caractérisé en ce que** la pince de serrage (20) et l'anneau (50) sont montés dans un manchon (70), et la pince de serrage (20) est reliée fixement au manchon (70).

6. Préhenseur rotatif (1) selon la revendication 5, **caractérisé en ce que** la pince de serrage (20), l'anneau (50) et le manchon (70) sont agencés coaxialement les uns aux autres.

7. Préhenseur rotatif (1) selon la revendication 5 ou 6, **caractérisé en ce que** le manchon (70) est conçu symétrique en rotation et monté de façon rotative dans un boîtier (90).

8. Préhenseur rotatif (1) selon l'une des revendications 5 à 7, **caractérisé en ce qu'**en état de fonctionnement, le manchon (70) est déplaçable verticalement dans le boîtier (90).

9. Préhenseur rotatif (1) selon l'une des revendications précédentes, **caractérisé en ce qu'**il est prévu un premier mécanisme d'entraînement (100) pour lever l'anneau (50), et un deuxième mécanisme d'entraînement (110) pour faire tourner la pince de serrage (20), et les premier et deuxième mécanismes d'entraînement (100, 110) sont agencés à côté de la pince de serrage (20).

10. Préhenseur rotatif (1) selon la revendication 9, **caractérisé en ce qu'**en l'état de fonctionnement, le premier mécanisme d'entraînement (100) produit un mouvement vertical permettant de relever l'anneau (50) par le biais d'un levier (101) à l'aide de la tige d'entraînement (60).

11. Préhenseur rotatif (1) selon la revendication 9 ou 10, **caractérisé en ce qu'**une articulation sphérique (102) est agencée entre le levier (101) et le premier mécanisme d'entraînement (100), l'articulation sphérique (102) transmettant un mouvement de rotation à la tige d'entraînement (60).

12. Préhenseur rotatif (1) selon l'une des revendications 9 à 11, **caractérisé en ce que** le deuxième mécanisme d'entraînement (110) entraîne une roue dentée d'entraînement (111) orientée horizontalement en l'état de fonctionnement, laquelle est montée de façon à coopérer avec une roue dentée de pince de serrage (112) reliée au manchon (70), et la roue dentée d'entraînement (111) étant conçue plus épaisse, la roue dentée de pince de serrage (112) pouvant ainsi coopérer avec la roue dentée d'entraînement même lorsque la pince de serrage est déplacée verticalement.

13. Préhenseur rotatif (1) selon l'une des revendications 7 à 12, **caractérisé en ce que** la pince de serrage (20) est montée de façon flottante au moyen d'un ressort de boîtier (91) orienté verticalement et agencé entre le boîtier (90) et la pince de serrage (20), la pince de serrage (20) pouvant ainsi être pressée vers le bas contre la force de ressort du ressort de boîtier (91) dans l'état de fonctionnement.

14. Préhenseur rotatif (1) selon l'une des revendications précédentes, **caractérisé en ce que** la tige d'entraînement (60) présente un perçage central (61) destiné à recevoir une aiguille de capteur (40), l'aiguille de capteur (40) étant agencée de telle façon que lorsque le couvercle (80) est placé dans l'espace creux (25), l'aiguille de capteur (40) peut être déplacée le long de l'axe du perçage central, et ce déplacement peut être détecté par un capteur (41).

15. Préhenseur rotatif (1) selon l'une des revendications précédentes, **caractérisé en ce que** la pince de serrage (20) et l'anneau (50) sont fabriqués en aluminium anodisé et/ou imprégné de Téflon.
